(19) Europäisches Patentamt

European Patent Office

Office européen des brevets

(11) Veröffentlichungsnummer: **0 319 718 B1**

(12) **EUROPÄISCHE PATENTSCHRIFT**

(45) Veröffentlichungstag der Patentschrift: **26.08.92**

(51) Int. Cl.⁵: **F16K 11/074**, F16K 27/04

(21) Anmeldenummer: **88118534.2**

(22) Anmeldetag: **08.11.88**

---

(54) **Wassermischventil.**

---

(30) Priorität: **16.11.87 DE 3738854**

(43) Veröffentlichungstag der Anmeldung:
**14.06.89 Patentblatt 89/24**

(45) Bekanntmachung des Hinweises auf die
Patenterteilung:
**26.08.92 Patentblatt 92/35**

(84) Benannte Vertragsstaaten:
**AT CH DE ES FR GB IT LI NL SE**

(56) Entgegenhaltungen:
**EP-A- 0 075 323**
**DE-A- 3 339 464**
**DE-A- 3 531 932**
**FR-A- 2 439 345**
**FR-A- 2 543 253**

(73) Patentinhaber: **FRIEDRICH GROHE AKTIENGE-
SELLSCHAFT**
**Hauptstrasse 137**
**W-5870 Hemer(DE)**

(72) Erfinder: **Mennigmann, Kurt**
**Akazienweg 8**
**W-5758 Fröndenberg(DE)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 319 718 B1

Rank Xerox (UK) Business Services

## Beschreibung

Die Erfindung betrifft ein Wassermischventil mit den im Oberbegriff des Patentanspruchs 1 angegebenen Merkmalen.

Ein derartiges Mischventil ist aus der Druckschrift DE-A-33 39 464 bekannt. Bei diesem Mischventil sind die schlauchförmigen Dichtungen lose in einem Bodenteil zwischen der Ventilsitzscheibe und der Sanitärarmatur angeordnet. Zur Lagesicherung und Abstützung ist außerdem an der Innenwandung der Dichtungen jeweils ein Stützring vorgesehen. Die Abdichtfunktion zwischen der Ventilsitzscheibe und der Sanitärarmatur wird mit dieser Dichtungsanordnung zufriedenstellend gelöst. Bei dieser Ausbildung ist es jedoch erforderlich, daß separate Dichtungen und Stützringe angefertigt und bei der Montage einzeln in das Bodenteil eingefügt werden müssen. Außerdem bereitet es Schwierigkeiten bzw. ist es aufwendig, die Einzelteile bei der Einmontage der Ventilkartusche in die Sanitärarmatur sicher an die abzudichtenden Punkte zu bringen bzw. ein Verrutschen der Dichtungen zu vermeiden.

Ferner ist es bereits aus der EP-A-0 075 323 bekannt, eine Dichtung mit einem feststehenden Keramikventilglied durch Aufvulkanisierung zu verbinden. Eine hinreichende Verbindung von Keramikmaterial mit dem gummielastischen Dichtungsmaterial ist jedoch relativ aufwendig.

Der Erfindung liegt die Aufgabe zugrunde, bei einem Wassermischventil nach dem Oberbegriff des Anspruchs 1 unter Beibehaltung der günstigen Wirkung der schlauchförmigen Dichtung, diese zu vereinfachen und insbesondere die Montage zu erleichtern.

Diese Aufgabe wird erfindungsgemäß durch die im kennzeichnenden Teil des Anspruchs 1 umschriebenen Merkmale gelöst.

Weitere Ausgestaltungen der Erfindung sind in den Ansprüchen 2 bis 6 angegeben.

Die mit der Erfindung erzielbaren Vorteile bestehen insbesondere darin, daß die Vielzahl von Einzelteilen, nämlich das Bodenteil sowie für drei Durchtrittsöffnungen drei Dichtungen nebst Stützring zu einem Teil vereinigt werden können, wobei die Stützringe völlig entfallen können. Außerdem kann die Kontrolle auf Vollständigkeit beim Einbau der Kartusche in ein Armaturengehäuse entfallen. Dichtigkeitsprobleme durch ein Verrutschen der Dichtungen bei der Montage können so gut wie nicht mehr vorkommen. Schließlich kann durch die erfindungsgemäße Ausbildung auch die Berstdruckgrenze erhöht werden, da die Dichtungen optimal im Bodenteil gehaltert sind, während bei den einzelnen losen Dichtungen bei starken Wasserdruckstößen nicht völlig ausgeschlossen werden kann, daß sie unter den Kunststoffboden rutschen.

Ausführungsbeispiele der Erfindung sind in der Zeichnung dargestellt und werden im folgenden näher beschrieben. Es zeigt

Figur 1　　ein in einem Sondergehäuse angeordnetes Mischventil in Seitenansicht, teilweise geschnitten;

Figur 2　　eine Druntersicht unter das Mischventil gemäß Figur 1 mit einem Bodenteil;

Figur 3　　das Bodenteil gemäß Figur 2 in der Schnittebene III;

Figur 4　　das Bodenteil gemäß Figur 3 mit einer anderen Dichtungsausbildung.

Der Einfachheit halber sind bei den Ausführungsbeispielen in der Zeichnung gleiche oder entsprechende Elemente mit jeweils gleichen Bezugszeichen versehen.

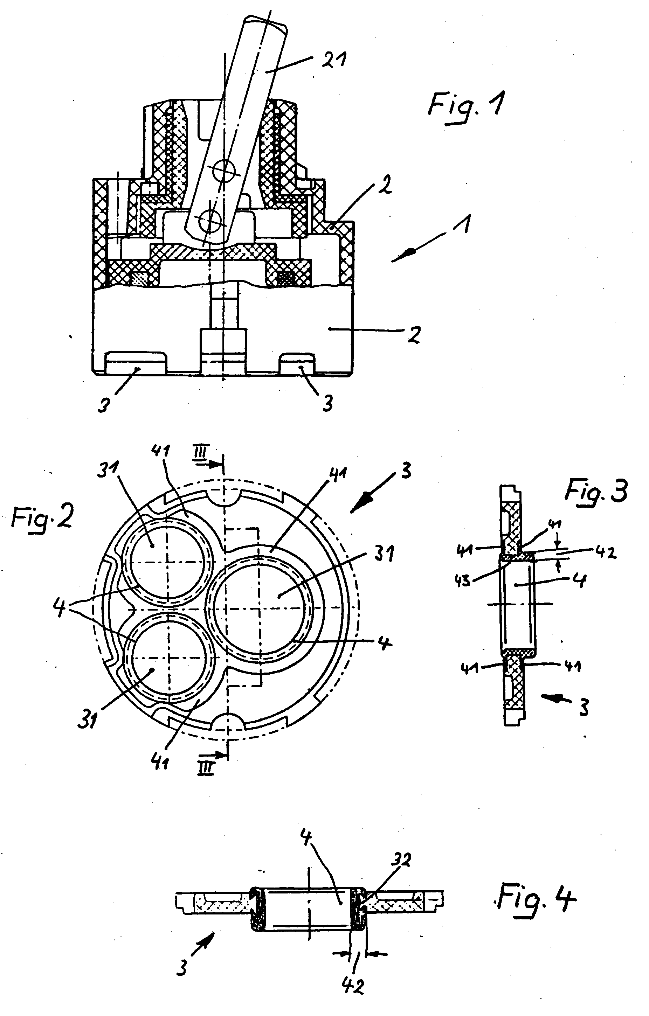

Das in den Figuren 1 bis 3 dargestellte Wassermischventil ist in einem Sondergehäuse 1 angeordnet, welches in entsprechend ausgelegten Sanitärarmaturen eingefügt werden kann. Das Sondergehäuse 1 wird aus einer topfartigen Hülse 2 und einem Bodenteil 3 gebildet. In dem Sondergehäuse 1 ist eine ortsfest gehalterte Ventilsitzscheibe angeordnet, auf der eine mit einem Betätigungsorgan 21 verschiebbare Regelscheibe angelagert ist. In der Ventilsitzscheibe ist jeweils eine Durchtrittsöffnung für Kalt- und Warmwasser und eine Auslaßöffnung für Mischwasser ausgebildet. Mit Hilfe eines in der Regelscheibe ausgebildeten Überströmkanals können diese Öffnungen in Abhängigkeit von der Stellung der Regelscheibe mehr oder weniger in Überdeckung gebracht werden und somit die Durchflußmenge und das Mischungsverhältnis von Kalt- und Warmwasser bestimmt werden.

An der Ventilsitzscheibe ist das Bodenteil 3 des Sondergehäuses 1 vorgelagert und weist entsprechende Öffnungen 31 für das Kalt-, Warm- und Mischwasser auf. In den Öffnungen 31 sind schlauchförmige Dichtungen 4 angeordnet, die an den Stirnseiten des Bodenteils 3 vorstehen und somit nach der Einmontage des Wassermischventils in die Sanitärarmatur eine dichte Verbindung zwischen den Durchtrittsöffnungen der Ventilsitzscheibe und den Aus- bzw. Eintrittsöffnungen in der Sanitärarmatur herstellen. Die Dichtungen 4 sind einstückig mit dem Bodenteil 3 durch Anvulkanisieren ausgebildet. Der schlauchartige Hauptteil der Dichtung 4 ist dabei im Bereich der Wandung des Bodenteils 3 mit einer Einschnürung 43 von etwa 1/3 der Schlauchdicke 42 versehen. Hierdurch kann eine gute Verbindung zum Bodenteil 3 hergestellt werden, wodurch die günstige Wirkung der schlauchartigen Ausbildung der Dichtung 4 im wesentlichen aufrechterhalten werden kann. Zur weiteren Befestigung der Dichtung 4 an dem Bodenteil 3 sind jeweils an den Stirnseiten des Bodenteils 3 in Einsenkungen umlaufende Flansche 41 ausgebildet, die eine verstärkte Verbindung der Dichtung 4 mit dem Bodenteil 3 ermöglichen, wie es insbesondere aus der Figur 3 ersichtlich ist.

In Figur 4 ist das Bodenteil gemäß Figur 3 mit einer anderen Dichtungsbefestigung dargestellt. Hierbei weist die Wandung der Öffnungen 31 im Bodenteil 3 im Querschnitt eine umlaufende Schwalbenschwanzform 32 auf, an der die Dichtung 4 anvulkanisiert ist. Auch bei dieser Ausbildung bleibt der angestrebte, schlauchartige Charakter der Dichtung 4 erhalten, da die Einschnürung 43 ebenfalls etwa nur 1/3 der Schlauchdicke 42 ausmacht.

Bei den beiden Ausführungsbeispielen ist die Dichtung 4 an das Bodenteil 3 anvulkanisiert. Selbstverständlich kann aber auch die Dichtung 4 durch Klebung oder andere geeignete Verbindungsmittel mit dem Bodenteil 3 verbunden werden.

## Patentansprüche

1. Wassermischventil bestehend aus einem in Sanitärarmaturen einsetzbarem Sondergehäuse (1) oder Kartusche, das aus einer topfartigen Hülse (2) und einem Wasserdurchtrittsöffnungen (31) aufweisenden Bodenteil (3) gebildet wird, und aus wenigstens einer, im wesentlichen unbeweglich gehalterten Ventilsitzscheibe und einer an der Ventilsitzscheibe angelagerten, mit Hilfe eines Betätigungsorgans (21) verschiebbaren Regelscheibe, wobei in den Wasserdurchtrittsöffnungen (31) jeweils schlauchförmige Dichtungen (4) aus gummielastischem Material zur Abdichtung zwischen der Ventilsitzscheibe und der Sanitärarmatur angeordnet sind, dadurch gekennzeichnet, daß am Bodenteil (3) im Bereich der Wandung der Öffnungen (31) die Dichtungen (4) unlösbar befestigt sind, und daß die Dichtungen (4) im Bereich der Wandung der Öffnungen (31) des Bodenteils (3) an ihrem äußeren Umfang eine Einschnürung (43) aufweisen.

2. Wassermischventil nach Anspruch 1, dadurch gekennzeichnet, daß die Dichtungen (4) am Bodenteil (3) anvulkanisiert sind.

3. Wassermischventil nach Anspruch 1 oder 2, dadurch gekennzeichnet, daß die Dichtungen (4) jeweils an den beiden Stirnseiten des Bodenteils (3) umlaufende Flansche (41) zur Halterung aufweisen.

4. Wassermischventil nach Anspruch 1 oder 2, dadurch gekennzeichnet, daß die Wandung im Bodenteil (3) im Querschnitt eine umlaufende Schwalbenschwanzform (32) zur Halterung der Dichtung (4) aufweist.

5. Wassermischventil nach einem der Ansprüche 1 bis 4, dadurch gekennzeichnet, daß die Einschnürung (43) der Dichtung (4) etwa 1/3 der maximalen Schlauchdicke (42) aufweist.

6. Wassermischventil nach Anspruch 3, dadurch gekennzeichnet, daß die Flansche (41) im Bodenteil (3) an den Stirnseiten eingesenkt sind.

## Claims

1. A water mixing valve consisting of a special housing (1) or cartridge which can be installed in sanitary fittings and is formed of a pot-like sleeve (2) and a base part (3) having water passage openings (31), and of at least one valve seat disc mounted substantially immovably and a regulating disc mounted on the valve seat disc and displaceable by means of an actuating member (21), tube-like seals (4) of rubbery resilient material being arranged in each of the water passage openings (31) for sealing between the valve seat disc and the sanitary fitting, characterised in that the seals (4) are non-detachably fastened to the base part (3) in the region of the wall of the openings (31), and that the seals (4), in the region of the wall of the openings (31) in the base part (3) have a constriction (43) on their outer periphery.

2. A water mixing valve according to Claim 1, characterised in that the seals (4) are vulcanised onto the base part (3).

3. A water mixing valve according to Claim 1 or 2, characterised in that the seals (4) each have on the two end faces of the base part (3) flanges (41) around them for retention.

4. A water mixing valve according to Claim 1 or 2, characterised in that the wall in the base part (3) has in cross-section a circumferential dove-tail shape (32) for the retention of the seal (4).

5. A water mixing valve according to one of Claims 1 to 4, characterised in that the constriction (43) of the seal (4) is of approximately 1/3rd of the maximum tube thickness (42).

6. A water mixing valve according to Claim 3, characterised in that the flanges (41) are recessed into the base part (3) on the end faces.

## Revendications

1. Robinet mélangeur composé d'un boîtier particulier (1) ou d'une cartouche qui se place dans un corps de robinet sanitaire, ce boîtier étant composé d'un manchon (2) en forme de pot et d'une partie de fond (3) munie d'orifices de passage d'eau (31), et d'au moins un disque obturateur maintenu pratiquement fixe et d'un disque de réglage monté sur le disque obturateur, et qui peut coulisser en étant commandé par un organe de manoeuvre (21), les orifices de passage d'eau (31) comportant chacun des joints tubulaires (4) en un matériau élastique comme du caoutchouc pour assurer l'étanchéité entre le disque obturateur et le corps du robinet sanitaire, robinet mélangeur caractérisé en ce que sur la partie de fond (3), au niveau de la paroi des orifices (31), les joints (4) sont fixés de manière inamovible et en ce que les joints (4) comportent un rétrécissement (43) à leur périphérie extérieure, au niveau de la paroi des ouvertures (31).

2. Robinet mélangeur selon la revendication 1, caractérisé en ce que les joints (4) sont vulcanisés sur la partie de fond (3).

3. Robinet mélangeur selon la revendication 1 ou 2, caractérisé en ce que les joints (4) comportent respectivement sur leurs deux faces frontales de la partie de fond (3), des brides périphériques (41) pour assurer la fixation.

4. Robinet mélangeur d'eau selon la revendication 1 ou 2, caractérisé en ce que la paroi de la partie de fond (3) a comme moyen de fixation du joint (4), une partie périphérique à section en queue d'aronde (32).

5. Robinet mélangeur selon l'une des revendications 1 à 4, caractérisé en ce que la partie en rétrécissement (43) du joint (4) correspond à environ 1/3 de l'épaisseur maximale (42) du tuyau.

6. Robinet mélangeur selon la revendication 3, caractérisé en ce que la bride (41) est matricée au niveau des faces frontales de la partie de fond (3).

Fig. 1

Fig. 2

Fig. 3

Fig. 4